# EUROPEAN PATENT SPECIFICATION

(11) **EP 4 447 183 B1**
(45) Date of publication and mention of the grant of the patent: **07.10.2026**
(21) Application number: 22904057.1
(22) Date of filing: 25.11.2022
(51) Int. Cl.: H01M 4/136, H01M 4/525, H01M 4/134, H01M 4/36, H01M 4/38, H01M 4/40, H01M 4/58, H01M 4/66, H01M 10/052, H01M 10/0562, H01M 10/0566, H01M 4/62, H01M 4/04, H01M 4/1395, H01M 10/058

(54) **BATTERY**
BATTERIE
BATTERIE

(30) Priority: 07.12.2021 JP 2021198902
(43) Date of publication of application: 16.10.2024
(73) Proprietor: Panasonic Intellectual Property Management Co., Ltd., Kadoma-shi, Osaka 571-0057 (JP)
(72) Inventor: OTO, Takashi, Kadoma-shi, Osaka 571-0057 (JP); FUJIMOTO, Masahisa, Kadoma-shi, Osaka 571-0057 (JP)
(74) Representative: Novagraaf International SA
(86) International application number: PCT/JP2022/043534
(87) International publication number: WO 2023/106126

(56) References cited:
- JP-A- 2000 030 703
- JP-A- 2019 164 961
- JP-A- 2019 164 961
- JP-A- H10 241 670

## Description

### TECHNICAL FIELD

The claimed invention relates to a battery.

### BACKGROUND ART

Lithium secondary batteries, which have been actively researched and developed in recent years, have battery characteristics greatly affected by the electrodes used therein, such as gravimetric energy density, volumetric energy density, charge and discharge voltage, charge and discharge cycle life characteristics, and storage characteristics. Thus, attempts have been made to enhance the battery characteristics by modifying the electrode active materials.

For example, proposals have been made from the early days for lithium secondary batteries using, as the electrodes, aluminum, silicon, tin, or the like that is electrochemically alloyed with lithium during charge. Patent Literature 1 discloses a lithium secondary battery including: a negative electrode including a negative electrode material consisting of an alloy including silicon, tin, and a transition metal; a positive electrode; and an electrolyte.

Patent Literature 2 discloses a lithium secondary battery including: a negative electrode using, as the active material, a silicon thin film formed on a current collector; a positive electrode; and an electrolyte. Patent Literature 3 relates to an alloy, a negative electrode active material, a negative electrode, and a nonaqueous electrolyte storage element.

Another example of the metal that can be alloyed with lithium is bismuth (Bi). Non Patent Literature 1 discloses a negative electrode produced by using a Bi powder in which Bi is included as the negative electrode active material.

### CITATION LIST

### Patent Literature

Patent Literature 1: JP 4898737 B
Patent Literature 2: JP 3733065 B
Patent Literature 3: JP 2019-164961 A

### Non Patent Literature

Non Patent Literature 1: YAMAGUCHI Hiroyuki, "Amorphous Polymeric Anode Materials from Poly(acrylic acid) and Metal Oxide for Lithium Ion Batteries", Doctoral dissertation, Mie University, 2015.
Non Patent Literature 2: A. K. Padhi, K. S. Nanjundaswamy, and J. B. Goodenough, "Phospho-olivines as Positive-Electrode Materials for Rechargeable Lithium Batteries", J. Electrochem. Soc., 144, 1188 (1997).
Non Patent Literature 3: Shou-Hang Bo, Kyung-Wan Nam, Olaf J. Borkiewicz, Yan-Yan Hu, Xiao-Qing Yang, Peter J. Chupas, Karena W. Chapman, Lijun Wu, Lihua Zhang, Feng Wang, Clare P. Grey, and Peter G. Khalifah, "Structures of Delithiated and Degraded LiFeBO3, and Their Distinct Changes upon Electrochemical Cycling", Inorg. Chem. 53, 13, 6585-6595 (2014).
Non Patent Literature 4: Laura Lander, Marine Reynaud, Javier Carrasco, Nebil A Katcho, Christophe Bellin, Alain Polian, Benoit Baptiste, Gwenaelle Rousse, Jean-Marie Tarascon, "Unveiling the electrochemical mechanisms of Li2Fe(SO4)2 polymorphs by neutron diffraction and density functional theory calculations", Phys. Chem. Chem. Phys., 18 (21), 14509-19 (2016).
Non Patent Literature 5: R. Dominko, M. Bele, A. Kokalj, M. Gaberscek, J. Jamnik, "Li2MnSiO4 as a potential Li-battery cathode material", Journal of Power Sources. Volume 174, Issue 2, Pages 457-461).

### SUMMARY OF CLAIMED INVENTION

The claimed invention provides a battery having a structure suitable for plateau expansion.

A battery of the claimed invention is as defined in the appended claims. It includes:
a positive electrode;
a negative electrode; and
an electrolyte layer positioned between the positive electrode and the negative electrode, wherein
the positive electrode includes a positive electrode active material layer,
the positive electrode active material layer includes a compound, the compound including a transition metal element and an oxoanion and being capable of occluding and releasing lithium ions,
the negative electrode includes a negative electrode current collector and a negative electrode active material layer, and
the negative electrode active material layer includes an alloy, the alloy including Bi and Ni. According to the claimed invention, the negative electrode active material layer is a heat-treated plating layer.

According to the claimed invention, it is possible to provide a battery having a structure suitable for plateau expansion.

### BRIEF DESCRIPTION OF DRAWINGS

FIG. 1 is a cross-sectional view schematically showing a configuration example of a battery according to an embodiment of the claimed invention.
FIG. 2 is a graph showing an example of the X-ray diffraction pattern of a negative electrode active material layer constituted of a BiNi thin film formed on a nickel foil.
FIG. 3 is a partially enlarged cross-sectional view schematically showing a modification of the negative electrode of the battery according to the embodiment of the claimed invention.
FIG. 4 is a cross-sectional view schematically showing a modification of the battery according to the embodiment of the claimed invention.
FIG. 5 is a graph of the results of a charge and discharge test on a test cell according to Example 1, showing the voltage during discharge and the discharge capacity per unit mass of the positive electrode active material.
FIG. 6 is a graph of the results of a charge and discharge test on a test cell according to Example 2, showing the voltage during discharge and the discharge capacity per unit mass of the positive electrode active material.
FIG. 7 is a graph of the results of a charge and discharge test on a test cell according to Reference Example 1, showing the voltage during discharge and the discharge capacity per unit mass of the positive electrode active material.
FIG. 8 is a graph of the results of a charge and discharge test on a test cell according to Reference Example 2, showing the voltage during discharge and the discharge capacity per unit mass of the positive electrode active material.
FIG. 9 is a graph of the results of a charge and discharge test on a test cell according to Reference Example 3, showing the voltage during discharge and the discharge capacity per unit mass of the positive electrode active material.

### DESCRIPTION OF EMBODIMENTS

As described in BACKGROUND ART section, attempts have been made to enhance the battery characteristics of lithium secondary batteries by modifying the electrode active materials.

Using lithium metal as the negative electrode active material can obtain a lithium secondary battery having a high energy density both per weight and per volume. However, in a lithium secondary battery having such a configuration, lithium is deposited in the form of dendrites during charge. The lithium metal deposited partially reacts with the electrolyte solution, causing a low charge and discharge efficiency and thus poor cycle characteristics.

To address this issue, using carbon, particularly graphite, as the negative electrode has been proposed. In a negative electrode using carbon, charge and discharge occur by lithium intercalation into and deintercalation from carbon. In a negative electrode having such a configuration, the charge and discharge mechanism causes no deposition of lithium metal in the form of dendrites. In addition, a lithium secondary battery employing a negative electrode having such a configuration involves topotactic reactions and thus is extremely excellent in reversibility, exhibiting nearly 100% charge and discharge efficiency. For these reasons, lithium secondary batteries employing negative electrodes using carbon, particularly graphite, have been put to practical use. However, graphite has a theoretical capacity density of 372 mAh/g, which is about one-tenth of the theoretical capacity density of lithium metal, 3884 mAh/g. Consequently, in negative electrodes using graphite, the active material has a low capacity density. Furthermore, since the actual capacity density of graphite has almost reached the theoretical capacity density of graphite, the capacity increase of negative electrodes using graphite has been pushed to the limit.

To address these, proposals have been made from the early days for lithium secondary batteries using, as the electrodes, aluminum, silicon, tin, or the like that is electrochemically alloyed with lithium during charge. The metal to be alloyed with lithium has a considerably higher capacity density than graphite has. Silicon particularly has a high theoretical capacity density. Thus, electrodes using aluminum, silicon, tin, or the like that can be alloyed with lithium are promising as high-capacity negative electrodes for batteries, and various types of secondary batteries using such negative electrodes have been proposed (Patent Literature 1).

However, a negative electrode using a metal such as the above that can be alloyed with lithium expands upon occluding lithium and contracts upon releasing lithium. Repeating such expansion and contraction during charge and discharge causes pulverization of the alloy itself serving as the electrode active material caused by the charge and discharge, deteriorating the current collection characteristics of the negative electrode. Consequently, sufficient cycle characteristics have not been exhibited. To address such a drawback, several experiments as below have been made. According to one experiment, for example, on a current collector having a roughened surface, silicon is deposited by sputtering or vapor deposition or tin is deposited by electroplating (Patent Literature 2). In this experiment, the active material, that is, the metal that can be alloyed with lithium, in the form of a thin film, adheres to the current collector, causing little degradation in current collection characteristics despite repeated expansion and contraction of the negative electrode caused by lithium occlusion and release.

However, forming an active material by sputtering or vapor deposition as above results in high manufacturing costs, making this approach impractical. Although forming an active material by electroplating, which is less costly in manufacturing, is practical, silicon is extremely difficult to use for electroplating. Moreover, tin, which is easy to use for electroplating, has an issue of a poor flatness of the discharge voltage and thus difficulty in using as the battery electrode.

Another example of the metal that can be alloyed with lithium is bismuth (Bi). Bi, together with lithium (Li), forms compounds LiBi and Li₃Bi. LiBi and Li₃Bi have almost no difference in potential. In contrast, tin, which has a poor flatness of the discharge voltage, forms several compounds together with lithium. These compounds considerably differ in potential from each other. In other words, unlike tin, Bi does not have properties of forming, together with lithium, multiple compounds that greatly differ in potential from each other. For this reason, an electrode including Bi as the active material has a flat potential and thus is excellent in flatness of the discharge voltage. Thus, an electrode including Bi as the active material is considered to be suitable as the battery electrode.

However, Bi, which is poor in malleability and ductility, has difficulty in manufacturing in the form of a metal plate or metal foil, and consequently can be obtained in the form of a pellet or powder. Thus, studies on an electrode including Bi as the active material have focused on an electrode manufactured by applying a Bi powder to a current collector. However, such an electrode manufactured by using a Bi powder undergoes pulverization caused by repeated charge and discharge, deteriorating the current collection characteristics. Consequently, sufficient cycle characteristics have not been exhibited. For example, Non Patent Literature 1 discloses production of an electrode including Bi as the active material in which a Bi powder is used and polyvinylidene fluoride (PVdF) or polyimide (PI) is used as the binder. In Non Patent Literature 1, a battery produced by using the above electrode is charged and discharged. However, the electrode produced exhibits extremely poor results in both the initial charge and discharge curves and the cycle characteristics. Although measured at a considerably low rate equivalent to 0.042 IT, the battery exhibits a low initial charge and discharge efficiency and a severe cycle degradation in addition, and is accordingly not suitable for practical use. Regarding this cycle degradation, Non Patent Literature 1 points out as follows: as the Bi active material expands during Li intercalation and contracts during Li deintercalation, the active material becomes pulverized, presumably causing no more formation of the electron conduction paths and thus causing a capacity decrease.

The present inventors have focused on Bi, which, as described above, does not have properties of forming, together with Li, multiple compounds greatly different in potential and thus is excellent in flatness of the discharge voltage, and the present inventors have conducted earnest studies on a battery that can have improved cycle characteristics. As a result, the present inventors have arrived at a novel technical idea that using an alloy including Bi and Ni as the active material improves the cycle characteristics of the battery.

The present inventors have conducted further detailed studies on a battery in which an alloy including Bi and Ni is used as the active material. Specifically, the studies have been conducted on the selection of an appropriate positive electrode material in using an alloy including Bi and Ni as the negative electrode active material.

Examples of positive electrode materials that have been under active research and development include layered lithium metal composite oxides and spinel-type lithium metal composite oxides. A lithium-ion secondary battery using such a lithium metal composite oxide as the positive electrode material can achieve a high voltage in the 4-V class. Thus, lithium-ion secondary batteries using lithium metal composite oxides as the positive electrode materials have been increasingly put to practical use as batteries having a high energy density.

Lithium composite oxides currently proposed as positive electrode materials for lithium-ion secondary batteries such as the above include lithium-cobalt composite oxide (LiCoO₂), which is relatively easy to synthesize, lithium-nickel composite oxide (LiNiO₂) using nickel, which is less expensive than cobalt, lithium-nickel-manganese composite oxide (LiNi_{0.5}Mn_{0.5}O₂), lithium-manganese composite oxide (LiMn₂O₄) using manganese, lithium-nickel-cobalt-manganese composite oxide (LiNi_{1/3}Co_{1/3}Mn_{1/3}O₂), and lithium-nickel-cobalt-aluminum composite oxide (LiNi_{1/3}Co_{1/3}Al_{1/3}O₂).

According to further studies conducted by the present inventors, however, the following has been found: in the case where the positive electrode material exemplified above is combined with a negative electrode material in which an alloy including Bi and Ni is used as the negative electrode active material, the resultant battery has room for improvement in flatness of the discharge voltage.

As a result of earnest studies, the present inventors have found that in cell formation by using an electrode including an alloy including Bi and Ni as the negative electrode active material, a positive electrode including a particular positive electrode active material is used, so that the battery can have an enhanced flatness of the discharge voltage, that is, can have an expanded plateau of the battery voltage. The present inventors thus have completed the claimed invention.

A large plateau of the battery voltage is of great advantage in facilitating an energy-efficient design in battery mounting on devices.

A battery according to a first aspect of the claimed invention includes:
a positive electrode;
a negative electrode; and
an electrolyte layer positioned between the positive electrode and the negative electrode, wherein
the positive electrode includes a positive electrode active material layer,
the positive electrode active material layer includes a compound, the compound including a transition metal element and an oxoanion and being capable of occluding and releasing lithium ions,
the negative electrode includes a negative electrode current collector and a negative electrode active material layer,
the negative electrode active material layer includes an alloy, the alloy including Bi and Ni, and
the negative electrode active material layer is a heat-treated plating layer.

According to the first aspect, it is possible to provide a battery having a configuration suitable for plateau expansion. The battery according to the claimed invention can have improved cycle characteristics and an enhanced capacity in addition to a large plateau and an enhanced volumetric energy density.

In a second aspect, for example, the battery according to the first aspect may be such that the oxoanion includes B, Si, P, or S.

The battery according to the second aspect can achieve a larger plateau.

In a third aspect, for example, the battery according to the second aspect may be such that the oxoanion is BO₃³⁻, SiO₄⁴⁻, PO₄³⁻, P₂O₇⁴⁻, or SO₄²⁻.

The battery according to the third aspect can achieve a larger plateau.

In a fourth aspect, for example, the battery according to any one of the first to third aspects may be such that an electrochemical reaction between the compound and lithium includes a two-phase coexistence reaction.

The battery according to the fourth aspect can achieve a larger plateau.

In a fifth aspect, for example, the battery according to any one of the first to fourth aspects may be such that the positive electrode active material layer includes the compound as a main component of a positive electrode active material.

The battery according to the fifth aspect can achieve a larger plateau.

In a sixth aspect, for example, the battery according to any one of the first to fifth aspects may be such that the compound has an olivine structure.

The battery according to the sixth aspect can achieve a larger plateau.

In a seventh aspect, for example, the battery according to any one of the first to sixth aspects may be such that the transition metal element is at least one selected from the group consisting of Fe, Mn, Co, and Ni.

The battery according to the seventh aspect can achieve a larger plateau.

In an eighth aspect, for example, the battery according to any one of the first to seventh aspects may be such that the positive electrode active material layer includes LiFePO₄.

The battery according to the eighth aspect can achieve a larger plateau.

In a ninth aspect, for example, the battery according to any one of the first to eighth aspects may be such that the negative electrode active material layer includes BiNi.

According to the ninth aspect, it is possible to achieve a battery having a large plateau and an enhanced volumetric energy density.

In a tenth aspect, for example, the battery according to the ninth aspect may be such that the BiNi is included as a main component of a negative electrode active material.

According to the tenth aspect, it is possible to achieve a battery having a larger plateau and an enhanced volumetric energy density.

In an eleventh aspect, for example, the battery according to the ninth or tenth aspect may be such that the BiNi has a monoclinic crystal structure of space group C2/m.

The battery according to the eleventh aspect can have improved cycle characteristics in addition to a large plateau and an enhanced volumetric energy density.

In a twelfth aspect, for example, the battery according to any one of the first to eleventh aspects may be such that at least one selected from the group consisting of LiBi and Li₃Bi is included.

According to the twelfth aspect, it is possible to achieve a battery having a larger plateau and an enhanced volumetric energy density.

In a thirteenth aspect, for example, the battery according to any one of the first to twelfth aspects may be such that the negative electrode active material layer is free of a solid electrolyte.

According to the thirteenth aspect, it is possible to achieve a battery having a larger plateau and an enhanced volumetric energy density.

In a fourteenth aspect, for example, the battery according to any one of the first to thirteenth aspects may be such that in an X-ray diffraction pattern of the negative electrode active material layer obtained by surface X-ray diffractometry using Cu-Kα radiation,
when a height intensity of a maximum peak present in a diffraction angle 2θ range from 29° to 31° is represented by I(1) and a height intensity of a maximum peak present in a diffraction angle 2θ range from 41° to 43° is represented by I(2),
a ratio I(2)/I(1) of the I(2) to the I(1) is 0.28 or less.

The battery according to the fourteenth aspect can have improved cycle characteristics and an enhanced capacity in addition to a large plateau and an enhanced volumetric energy density.

In a fifteenth aspect, for example, the battery according to any one of the first to fourteenth aspects may be such that the negative electrode current collector includes at least one selected from the group consisting of Cu and Ni.

According to the fifteenth aspect, it is possible to achieve a battery having a larger plateau and an enhanced volumetric energy density.

In a sixteenth aspect, for example, the battery according to any one of the first to fifteenth aspects may be such that the electrolyte layer is a solid electrolyte layer.

The battery according to the sixteenth aspect can have improved cycle characteristics in addition to a large plateau and an enhanced volumetric energy density.

In an seventeenth aspect, for example, the battery according to the sixteenth aspect may be such that the solid electrolyte layer includes a halide solid electrolyte, and the halide solid electrolyte is free of sulfur.

According to the seventeenth aspect, it is possible to achieve a battery having a larger plateau and a further enhanced volumetric energy density.

In a eighteenth aspect, for example, the battery according to the sixteenth aspect may be such that the solid electrolyte layer includes a sulfide solid electrolyte.

According to the eighteenth aspect, it is possible to achieve a battery having a larger plateau and a further enhanced volumetric energy density.

In a nineteenth aspect, for example, the battery according to any one of the first to fifteenth aspects may be such that the electrolyte layer includes an electrolyte solution.

According to the nineteenth aspect, it is possible to achieve a battery having a larger plateau and a further enhanced volumetric energy density.

An embodiment of the claimed invention will be described below with reference to the drawings. The following descriptions are each a generic or specific example. The numerical values, composition, shape, film thickness, electrical characteristics, secondary battery structure, etc., shown below are illustrative only, and are not intended to limit the claimed invention.

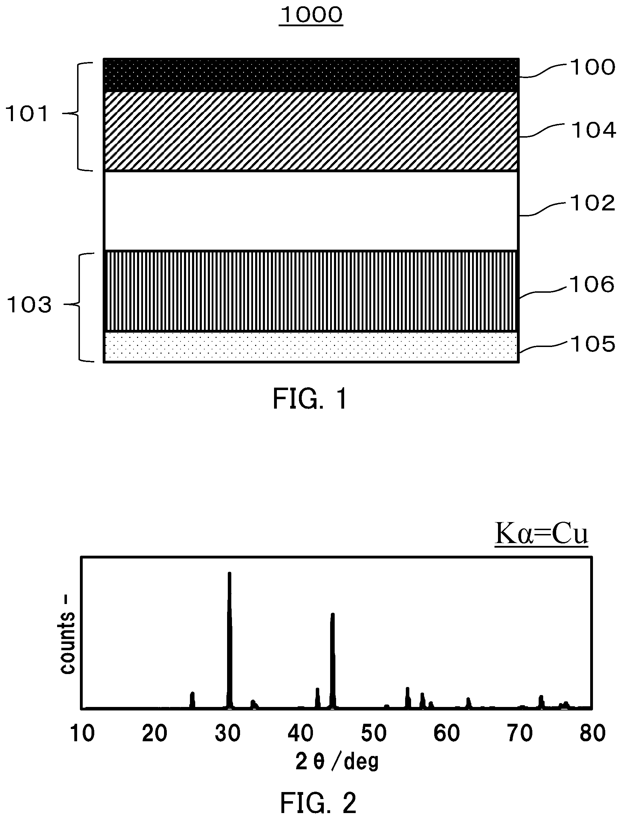

FIG. 1 is a cross-sectional view schematically showing a configuration example of a battery 1000 according to the embodiment of the claimed invention.

The battery 1000 includes a negative electrode 101, a positive electrode 103, and an electrolyte layer 102 positioned between the negative electrode 101 and the positive electrode 103.

The negative electrode 101 includes a negative electrode current collector 100 and a negative electrode active material layer 104. The negative electrode active material layer 104 is positioned between the negative electrode current collector 100 and the electrolyte layer 102. The negative electrode active material layer 104 includes an alloy, and the alloy includes Bi and Ni.

The positive electrode 103 includes a positive electrode active material layer 106. The positive electrode active material layer 106 includes a compound, and the compound includes a transition metal element and an oxoanion and is capable of occluding and releasing lithium ions.

As shown in FIG. 1, the positive electrode 103 may include a positive electrode current collector 105 in contact with the positive electrode active material layer 106. In the case where the positive electrode current collector 105 is provided, it is possible to collect electricity from the battery 1000 with a high efficiency.

The battery 1000 includes, as the negative electrode active material, an alloy including Bi and Ni, and includes, as the positive electrode active material, a compound, and the compound includes a transition metal element and an oxoanion and is capable of occluding and releasing lithium ions. With this configuration, the battery 1000 can have an enhanced flatness of the discharge voltage, that is, can have an expanded plateau of the battery voltage.

In the battery 1000, the electrolyte layer 102 is a solid electrolyte layer. Accordingly, although charge and discharge cause repeated expansion and contraction of the negative electrode active material layer 104 including the alloy including Bi and Ni as the negative electrode active material, the electrolyte is prevented from entering the negative electrode active material layer 104. This suppresses a decrease in the electron conduction paths in the negative electrode active material layer 104 caused by repeated charge and discharge. Accordingly, the battery 1000 is less prone to degradation in the current collection characteristics of the negative electrode active material layer 104 caused by charge and discharge, and therefore can have favorable cycle characteristics.

The battery 1000 is, for example, a lithium secondary battery. The metal ions that are occluded and released by the negative electrode active material layer 104 of the negative electrode 101 and the positive electrode active material layer 106 of the positive electrode 103 during charge and discharge of the battery 1000 are lithium ions.

The negative electrode active material layer 104 includes, as the alloy including Bi and Ni, for example, BiNi. The negative electrode active material layer 104 may include BiNi as the main component. Here, the phrase "the negative electrode active material layer 104 includes BiNi as the main component" is defined as meaning that "the content of BiNi in the negative electrode active material layer 104 is 50 mass% or more". The content of BiNi in the negative electrode active material layer 104 can be determined by, for example: performing elemental analysis by energy dispersive X-ray spectroscopy (EDX) to confirm that Bi and Ni are included in the negative electrode active material layer 104; and performing Rietveld analysis on the X-ray diffraction results for the negative electrode active material layer 104 to calculate the ratio between the compounds included therein.

With the above configuration, the battery 1000 can achieve a large plateau of the voltage and an enhanced volumetric energy density.

BiNi included in the negative electrode active material layer 104 may have a monoclinic crystal structure of space group C2/m.

With the above configuration, it is possible to achieve improved cycle characteristics of the battery in addition to a large plateau and an enhanced volumetric energy density.

The negative electrode active material layer 104 including BiNi as the main component may be constituted of, for example, BiNi in the form of a thin film (hereinafter referred to as a "BiNi thin film").

In the X-ray diffraction pattern of the negative electrode active material layer 104 obtained by surface X-ray diffractometry using Cu-Kα radiation, when the height intensity of the maximum peak present in a diffraction angle 2θ range from 29° to 31° is represented by I(1) and the height intensity of the maximum peak present in a diffraction angle 2θ range from 41° to 43° is represented by I(2), the ratio I(2)/I(1) of the I(2) to the I(1) may be 0.28 or less.

In the X-ray diffraction pattern, the maximum peak present in the diffraction angle 2θ range from 29° to 31° corresponds to a peak derived from the (2,2,1) plane of BiNi, which is an intermetallic compound. Furthermore, in the X-ray diffraction pattern, the maximum peak present in the diffraction angle 2θ range from 41° to 43° corresponds to a **peak derived** from the (2,2,3) plane of the intermetallic compound BiNi. The peak intensity ratio I(2)/I(1) of 0.28 or less indicates that the negative electrode active material layer 104 has a surface with a low ratio of the (2,2,3) plane to the (2,2,1) plane of BiNi having a monoclinic crystal structure of space group C2/m. In other words, it is indicated that the negative electrode active material layer 104 has a surface with a higher orientation of the (2,2,1) plane. The negative electrode active material layer 104 having a surface with such an orientation in the crystal structure of BiNi can have a high adhesion to the negative electrode current collector 100. Accordingly, in the case where the negative electrode active material layer 104 having such a surface orientation, the negative electrode active material layer 104 is less prone to degradation in current collection characteristics despite its repeated expansion and contraction caused by charge and discharge. Therefore, the battery 1000 of the claimed invention can have improved cycle characteristics and an enhanced capacity in addition to a large plateau and an enhanced volumetric energy density.

The X-ray diffraction pattern of the active material layer 104 can be obtained by θ-2θ X-ray diffractometry using Cu-Kα radiation having wavelengths of 1.5405 Å and 1.5444 Å, that is, wavelengths of 0.15405 nm and 0.15444 nm.

The diffraction angle of a peak in the X-ray diffraction pattern is defined as an angle at which the maximum intensity is exhibited for a projecting portion having an SN ratio (that is, the ratio of a signal S to a background noise N) of 1.3 or more and a half width of 10° or less. The half width refers to a width indicated by the difference between two diffraction angles at which the intensity of the X-ray diffraction peak is half of a maximum intensity I_{MAX} of the X-ray diffraction peak.

The negative electrode active material layer 104 constituted of a BiNi thin film including BiNi as the main component and satisfying the above surface orientation can be produced by, for example, electroplating. The manufacturing method for the negative electrode 101 by producing the negative electrode active material layer 104 by electroplating is, for example, as follows.

First, a substrate for electroplating is prepared. In the negative electrode 101, the negative electrode current collector 100 serves as the substrate, for example. The negative electrode current collector 100 prepared is, for example, a current collector including Ni. The method for manufacturing the negative electrode 101 includes, for example:
forming a Bi plating layer on a current collector including Ni by electroplating; and
heating the current collector and the Bi plating layer to diffuse Ni included in the current collector into the Bi plating layer and thus to obtain an electrode in which an active material layer including BiNi is formed on the current collector. The heating temperature for the Bi plating layer is, for example, 250°C or higher, and may be 350°C or higher.

The method for manufacturing the negative electrode 101 will now be described in more detail.

First, a substrate for electroplating is prepared. In the negative electrode 101, the negative electrode current collector 100 serves as the substrate, for example. The negative electrode current collector 100 prepared is, for example, a nickel foil. The nickel foil is preliminarily degreased with an organic solvent, and then degreased by being immersed in an acidic solvent with its one side masked. Thus, the surface of the nickel foil is activated. The nickel foil activated is connected to a power supply for current application. The nickel foil connected to the power supply is immersed in a bismuth plating bath. The bismuth plating bath used is, for example, an organic acid bath containing Bi³⁺ ions and an organic acid. Subsequently, electrical current is applied to the nickel foil under the control of the current density and current application time, so that the unmasked surface of the nickel foil is electroplated with Bi. Following the electroplating, the nickel foil is taken out from the plating bath, and the mask is removed. The nickel foil is then cleaned with pure water and dried. Through these steps, a Bi plating layer is formed on the surface of the nickel foil. The bismuth plating bath used in forming the Bi plating layer is not particularly limited, and can be appropriately selected from known bismuth plating baths capable of depositing a thin film made of a simple substance of Bi. For the bismuth plating bath, the organic acid bath can be an organic sulfonic acid bath, a gluconic acid and ethylenediaminetetraacetic acid (EDTA) bath, or a citric acid and EDTA bath. Furthermore, the bismuth plating bath may be, for example, a sulfuric acid bath. Moreover, an additive may be added to the bismuth plating bath.

Here, Table 1 shows the target thickness of the Bi plating layer produced by Bi electroplating and the thicknesses of the Bi plating layers actually produced.

The samples of the Bi plating layer were produced in the same manner as in Example 1 which will be described later. In other words, in producing the samples, the current application time for the nickel foil serving as the plating substrate was adjusted to target for a plating thickness of 5 µm. The thickness of the obtained Bi plating layer was measured with an X-ray fluorescence spectrometer SEA6000VX manufactured by Seiko Instruments Inc. In the five samples, the Bi layers had respective average thicknesses of 5.7 µm, 5.1 µm, 5.1 µm, 5.7 µm, and 5.8 µm.

**[Table 1]**

| | Target thickness: 5 µm | | | | |
|---|---|---|---|---|---|
| Sample No. | 1 | 2 | 3 | 4 | 5 |
| Plating thickness µm | 5.7 | 5.1 | 5.1 | 5.7 | 5.8 |

Next, the nickel foil and the Bi plating layer formed on the nickel foil are heated. This heat treatment causes solid-phase diffusion of Ni from the nickel foil into the Bi plating layer, so that an active material layer constituted of a BiNi thin film can be produced. Here, a sample obtained by electroplating a nickel foil with Bi is heat-treated, for example, at a temperature of 250°C or higher in a non-oxidizing atmosphere for 30 minutes or longer and shorter than 100 hours, so that solid-phase diffusion of Ni occurs from the nickel foil into the Bi plating layer and thus an active material layer constituted of a BiNi thin film can be produced.

The above samples, each of which had been produced by electroplating the nickel foil with Bi and targeting for a thickness of 5 µm, were each heat-treated at a temperature of 400°C in an argon atmosphere for 60 hours. Thus, an active material layer constituted of a BiNi thin film was produced. Furthermore, the active material layer produced, which was constituted of a BiNi thin film, was also subjected to surface structural analysis by surface X-ray diffractometry.

FIG. 2 is a graph showing an example of the X-ray diffraction pattern of a negative electrode active material layer constituted of a BiNi thin film formed on a nickel foil. The X-ray diffraction pattern was obtained from the surface of the active material layer, that is, the thickness direction of the active material layer 104, by a θ-2θ method using Cu-Kα radiation having wavelengths of 1.5405 Å and 1.5444 Å as X-rays with an X-ray diffractometer (MiniFlex manufactured by Rigaku Corporation). The X-ray diffraction pattern shown in FIG. 2 identified phases of BiNi having a crystal structure of space group C2/m and Ni included in the nickel foil serving as the current collector and in the active material layer.

From the X-ray diffraction pattern of the negative electrode active material layer obtained by surface X-ray diffractometry using Cu-Kα radiation shown in FIG. 2, the intensity ratio I(2)/I(1) of the height intensity I(2) of the maximum peak present in the diffraction angle 2θ range from 41° to 43° to the height intensity I(1) of the maximum peak present in the diffraction angle 2θ range from 29° to 31° was calculated. The ratio I(2)/I(1) was 0.28 or less.

From the results of the above X-ray diffraction pattern, it is demonstrated that the negative electrode active material layer 104, which is formed by electroplating the Ni-containing negative electrode current collector 100 with Bi to form a Bi plating layer and then heating the negative electrode current collector 100 together with the Bi plating layer formed on the negative electrode current collector 100, has a surface with a low ratio of the (2,2,3) plane to the (2,2,1) plane of BiNi having a monoclinic crystal structure of space group C2/m. In other words, it is demonstrated that the negative electrode active material layer 104 has a surface with a high orientation of the (2,2,1) plane. This reveals that, by forming a Bi plating layer on a Ni-containing negative electrode current collector and heat-treating the Bi plating layer obtained on the Ni-containing negative electrode current collector, the surface can be oriented to the (2,2,1) plane of BiNi having a monoclinic crystal structure of space group C2/m. The negative electrode including a BiNi thin film having such an orientation as the negative electrode active material layer can achieve further improved cycle characteristics of the battery in addition to a large plateau and an enhanced volumetric energy density.

The constituent elements of the battery 1000 according to the present embodiment will be described in more detail below.

### [Negative electrode]

As described above, the negative electrode 101 includes the negative electrode current collector 100 and the negative electrode active material layer 104. The negative electrode active material layer 104 is configured as described above. Thus, the negative electrode active material layer 104 includes, as the negative electrode active material having properties of occluding and releasing lithium ions, an alloy including Bi and Ni. The negative electrode active material layer 104 includes, as the negative electrode active material, for example, BiNi. The negative electrode active material layer 104 may include BiNi having a crystal structure of space group C2/m.

Bi is a metal element that can be alloyed with lithium. In contrast, Ni cannot be alloyed with lithium. Accordingly, an alloy including Ni has a reduced load on the crystal structure of the negative electrode active material in deintercalation and intercalation of lithium atoms during charge and discharge, presumably suppressing a decrease in the capacity retention rate of the battery. In the case where BiNi serves as the negative electrode active material, Bi occludes lithium and thus forms an alloy with lithium during charge. In other words, during charge of the battery 1000, a lithium-bismuth alloy is generated in the negative electrode active material layer 104. The lithium-bismuth alloy generated includes, for example, at least one selected from the group consisting of LiBi and Li₃Bi. In other words, during charge of the battery 1000, the active material layer 104 includes, for example, at least one selected from the group consisting of LiBi and Li₃Bi. During discharge of the battery 1000, the lithium-bismuth alloy releases lithium and thus returns to BiNi.

During charge and discharge of the battery 1000, BiNi serving as the negative electrode active material undergoes the following reactions, for example. The following reaction examples are those for the case where the lithium-bismuth alloy to be generated during charge is Li₃Bi.
Charge: BiNi+3Li⁺+3e⁻→Li₃Bi+Ni
Discharge: Li₃Bi+Ni→BiNi+3Li⁺+3e⁻

The negative electrode active material layer 104 may include substantially only BiNi as the negative electrode active material. In this case, the battery 1000 can have an enhanced capacity and improved cycle characteristics in addition to a large plateau and an enhanced volumetric energy density. The phrase "the negative electrode active material layer 104 includes substantially only BiNi as the negative electrode active material" means that, for example, the content of the negative electrode active material in the negative electrode active material layer 104 except for BiNi is 1 mass% or less. The negative electrode active material layer 104 may include only BiNi as the negative electrode active material.

The negative electrode active material layer 104 may be free of a solid electrolyte. For example, the negative electrode active material layer 104 may be a layer consisting of BiNi and/or a combination of a lithium-bismuth alloy and nickel that are generated during charge.

The negative electrode active material layer 104 may be disposed in direct contact with the surface of the negative electrode current collector 100.

The negative electrode active material layer 104 may be in the form of a thin film.

The negative electrode active material layer 104 is a heat-treated plating layer. The negative electrode active material layer 104 may be a heat-treated plating layer provided in direct contact with the surface of the negative electrode current collector 100. In other words, the negative electrode active material layer 104 may be a layer formed as described above by heat-treating a Bi plating layer formed on the Ni-containing negative electrode current collector 100.

In the case where the negative electrode active material layer 104 is a heat-treated plating layer provided in direct contact with the surface of the negative electrode current collector 100, the negative electrode active material layer 104 firmly adheres to the negative electrode current collector 100. It is accordingly possible to further suppress degradation in the current collection characteristics of the negative electrode 101 caused by repeated expansion and contraction of the negative electrode active material layer 104. This further improves the cycle characteristics of the battery 1000. Furthermore, when the negative electrode active material layer 104 is a heat-treated plating layer, it is also possible to achieve a further enhanced capacity owing to Bi, which can be alloyed with lithium, included at a high density in the negative electrode active material layer 104.

The negative electrode active material layer 104 may include a material other than the alloy including Bi and Ni.

The negative electrode active material layer 104 may further include a conductive material.

Examples of the conductive material include a carbon material, a metal, an inorganic compound, and a conductive polymer. Examples of the carbon material include graphite, acetylene black, carbon black, Ketjenblack, a carbon whisker, needle coke, and a carbon fiber. Examples of the graphite include natural graphite and artificial graphite. Examples of the natural graphite include vein graphite and flake graphite. Examples of the metal include copper, nickel, aluminum, silver, and gold. Examples of the inorganic compound include tungsten carbide, titanium carbide, tantalum carbide, molybdenum carbide, titanium boride, and titanium nitride. These materials may be used alone or in mixture.

The negative electrode active material layer 104 may further include a binder.

Examples of the binder include a fluorine-containing resin, a thermoplastic resin, ethylene propylene diene monomer (EPDM) rubber, sulfonated EPDM rubber, and natural butyl rubber (NBR). Examples of the fluorine-containing resin include polytetrafluoroethylene (PTFE), polyvinylidene fluoride (PVdF), and fluororubber. Examples of the thermoplastic resin include polypropylene and polyethylene. These materials may be used alone or in mixture.

The thickness of the negative electrode active material layer 104 is not particularly limited, and may be 1 µm or more and 100 µm or less, for example.

The material for the negative electrode current collector 100 is, for example, a simple substance of metal or an alloy. More specifically, the material for the negative electrode current collector 100 may be a simple substance of metal including, or an alloy including, at least one selected from the group consisting of copper, chromium, nickel, titanium, platinum, gold, aluminum, tungsten, iron, and molybdenum. The material for the negative electrode current collector 100 may be stainless steel.

The negative electrode current collector 100 may include at least one selected from the group consisting of copper (Cu) and nickel (Ni).

The negative electrode current collector 100 may be in the form of a plate or foil. To easily achieve a high conductivity, the negative electrode current collector 100 may be a metal foil, and may be a nickel-containing metal foil. Examples of the nickel-containing metal foil include a nickel foil and a nickel alloy foil. The content of nickel in the nickel-containing metal foil may be 50 mass% or more, and may be 80 mass% or more. In particular, the nickel-containing metal foil may be a nickel foil, which includes substantially only nickel as the metal. The negative electrode current collector 100 may be obtained by forming, on the surface of a metal foil made of a metal other than nickel or of an alloy other than a nickel alloy, a Ni layer such as a Ni plating layer.

The negative electrode current collector 100 may be a multilayer film.

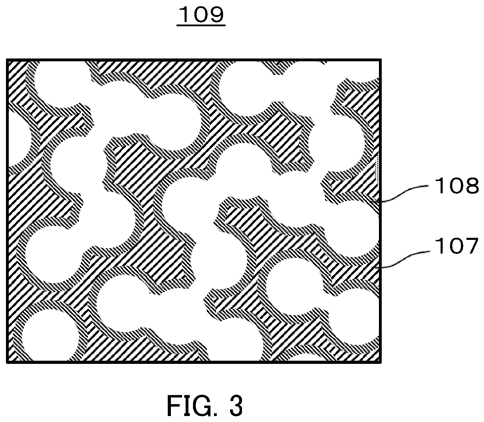

FIG. 3 is a partially enlarged cross-sectional view schematically showing a modification of the negative electrode of the battery according to the embodiment of the claimed invention. The negative electrode of the battery according to the embodiment of the claimed invention may be a negative electrode 109 including a substrate 107 that is a porous body and a negative electrode active material layer 108 positioned on the surface of the substrate 107, as shown in FIG. 3. The negative electrode active material layer 108 includes an alloy including Bi and Ni, like the negative electrode active material layer 104 described above. The negative electrode active material layer 108 includes, as the alloy including Bi and Ni, for example, BiNi. In the negative electrode 109 having such a configuration, the substrate 107 that is a porous body has, for example, conductivity. In this case, the substrate 107 can serve as the current collector of the negative electrode 109. The negative electrode 109 may further include a negative electrode current collector (not shown in the figures) constituted of a conductor in the form of, for example, a plate or foil. In this case, for example, the negative electrode current collector in the form of a plate or foil and the substrate 107 serve as the current collector of the negative electrode. The term "porous body" refers to a structure having pores including open holes that are open to the outside. Examples of the porous body as used herein include a mesh and a porous structure. The porous structure is a structure made of a porous material having pores of any size. An example of the porous structure is a foam. In addition, the porous structure may be a three-dimensional network structure having intercommunicating pores. The "pore" as used herein encompasses both one that is filled with, for example, an active material layer and one that is not filled with, for example, an active material layer. In other words, one that is filled with, for example, an active material layer is regarded as a "pore" as well.

### [Positive electrode]

The positive electrode 103 includes the positive electrode active material layer 106. The positive electrode active material layer 106 includes a material capable of occluding and releasing metal ions such as lithium ions. The material is, for example, a positive electrode active material.

The positive electrode active material layer 106 includes, as the positive electrode active material, a compound, and the compound includes a transition metal element and an oxoanion and is capable of occluding and releasing lithium ions.

Owing to the use of the positive electrode active material including a compound such as the above in combination with the negative electrode active material including an alloy including Bi and Ni, the battery 1000 according to the present embodiment can have an expanded plateau of the battery voltage.

An electrochemical reaction between the above compound and lithium includes, for example, a two-phase coexistence reaction. Owing to the use of the positive electrode active material including such a compound in combination with the negative electrode active material including an alloy including Bi and Ni, the battery 1000 according to the present embodiment can have a further expanded plateau of the battery voltage.

It is conventionally known that a compound capable of exhibiting, with lithium, an electrochemical reaction including a two-phase coexistence reaction can be used as the positive electrode active material of a lithium secondary battery.

For example, lithium iron phosphate LiFePO₄ having an olivine structure is known to, during charge and discharge by Li ion deintercalation and intercalation, undergo a two-phase coexistence reaction between two phases LiFePO₄ and FePO₄ (Non Patent Literature 2).

Moreover, lithium iron borate LiFeBO₃ is known to, during charge and discharge by Li ion deintercalation and intercalation, undergo a two-phase coexistence reaction between two phases LiFeBO₃ and Li_{0.5}FeBO₃ (Non Patent Literature 2).

Furthermore, lithium iron sulfate Li₂Fe(SO₄)₂ is known to, during charge and discharge by Li ion deintercalation and intercalation: for monoclinic Li₂Fe(SO₄)₂, undergo a two-phase coexistence reaction between two phases Li₂Fe(SO₄)₂ and LiFe(SO₄)₂; and for orthorhombic Li₂Fe(SO₄)₂, successively undergo a two-phase coexistence reaction between two phases Li₂Fe(SO₄)₂ and Li_{1.5}Fe(SO₄)₂ and a two-phase coexistence reaction between two phases Li_{1.5}Fe(SO₄)₂ and LiFe(SO₄)₂ (Non Patent Literature 3).

In addition, lithium manganese silicate Li₂MnSiO₄ is known to, during charge and discharge by Li ion deintercalation and intercalation, undergo a two-phase coexistence reaction between two phases Li₂MnSiO₄ and LiMnSiO₄ (Non Patent Literature 4).

Thus, the battery according to the present embodiment can use, as the compound including a transition metal element and an oxoanion and being capable of exhibiting, with lithium, an electrochemical reaction including a two-phase coexistence reaction, any of known compounds conventionally proposed such as those described above.

The positive electrode active material layer 106 of the battery 1000 according to the present embodiment may include the above compound as the main component. The "main component" as used herein refers to a component having the highest mass content.

In the above compound, the oxoanion may include B, Si, P, or S. In the case where such a compound is used as the positive electrode active material, a larger plateau can be achieved.

In the above compound, the oxoanion may be BO₃³⁻, SiO₄⁴⁻, PO₄³⁻, P₂O₇⁴⁻, or SO₄²⁻. In the case where such a compound is used as the positive electrode active material, a larger plateau can be achieved.

In the above compound, the transition metal element may be at least one selected from the group consisting of Fe, Mn, Co, and Ni. In the case where such a compound is used as the positive electrode active material, a larger plateau can be achieved.

In the above compound, the transition metal element may be at least one selected from the group consisting of Fe and Mn. The transition metal element may include Fe and may be Fe. In the case where such a compound is used as the positive electrode active material, a larger plateau can be achieved.

The above compound may have an olivine structure. In the case where such a compound is used as the positive electrode active material, a larger plateau can be achieved.

The above compound may be at least one selected from the group consisting of LiFePO₄, LiFeBO₃, Li₂Fe(SO₄)₂, and Li₂MnSiO₄. In the case where such a compound is used as the positive electrode active material, a larger plateau can be achieved.

The positive electrode active material layer 106 may include LiFePO₄. In the case where LiFePO₄ is used as the positive electrode active material, a larger plateau can be achieved.

Examples of the material for the positive electrode current collector 105 include a metal material. Examples of the metal material include copper, stainless steel, iron, and aluminum.

The positive electrode active material layer 106 may include a solid electrolyte. The solid electrolyte may be any of the solid electrolytes described as examples of the material for the solid electrolyte layer 102.

The positive electrode active material may have a median diameter of 0.1 µm or more and 100 µm or less. In the case where the positive electrode active material has a median diameter of 0.1 µm or more, the positive electrode active material and the solid electrolyte can form a favorable dispersion state. This enhances the charge and discharge characteristics of the battery. In the case where the positive electrode active material has a median diameter of 100 µm or less, lithium diffuses at an enhanced rate. This enables the battery to operate at a high output.

The positive electrode active material may have a larger median diameter than the solid electrolyte has. In this case, the positive electrode active material and the solid electrolyte can form a favorable dispersion state.

From the viewpoint of the energy density and output of the battery, in the positive electrode active material layer 106, the ratio of the volume of the positive electrode active material to the sum of the volume of the positive electrode active material and the volume of the solid electrolyte may be 0.30 or more and 0.95 or less.

To prevent the solid electrolyte from reacting with the positive electrode active material, a coating layer may be formed on the surface of the positive electrode active material. In this case, an increase in the reaction overvoltage of the battery can be suppressed. Examples of the coating material included in the coating layer include a sulfide solid electrolyte, an oxide solid electrolyte, and a halide solid electrolyte.

The positive electrode 103 may have a thickness of 10 µm or more and 500 µm or less. In the case where the positive electrode 103 has a thickness of 10 µm or more, the battery can achieve a sufficient energy density. In the case where the positive electrode 103 has a thickness of 500 µm or less, the battery can operate at a high output.

The positive electrode 103 may include a conductive material for the purpose of enhancing the electronic conductivity.

The positive electrode 103 may include a binder.

The conductive material and the binder each may be the same material as any of the materials usable as the negative electrode active material layer 104.

The positive electrode 103 may include a nonaqueous electrolyte solution, a gel electrolyte, or an ionic liquid for the purpose of facilitating the transfer of lithium ions and enhancing the output characteristics of the battery.

The nonaqueous electrolyte solution includes a nonaqueous solvent and a lithium salt dissolved in the nonaqueous solvent. Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorinated solvent include fluoroethylene carbonate, methyl fluoropropionate, fluorobenzene, fluoroethylmethyl carbonate, and fluorodimethylene carbonate. One nonaqueous solvent selected from the above may be used alone. Alternatively, a mixture of two or more nonaqueous solvents selected from the above may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used. The lithium salt has a concentration of, for example, 0.5 mol/L or more and 2 mol/L or less.

The gel electrolyte can be a polymer material impregnated with a nonaqueous electrolyte solution. Examples of the polymer material include polyethylene oxide, polyacrylonitrile, polyvinylidene fluoride, polymethylmethacrylate, and a polymer having an ethylene oxide bond.

Examples of the cation contained in the ionic liquid include:
(i) an aliphatic chain quaternary salt, such as tetraalkylammonium or tetraalkylphosphonium;
(ii) an aliphatic cyclic ammonium, such as pyrrolidinium, morpholinium, imidazolinium, tetrahydropyrimidinium, piperazinium, or piperidinium; and
(iii) a nitrogen-containing heterocyclic aromatic cation, such as pyridinium or imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may include a lithium salt.

### [Electrolyte layer]

The electrolyte layer 102 includes an electrolyte material. The electrolyte layer 102 is formed of, for example, a nonaqueous electrolyte. The electrolyte material included in the electrolyte layer 102 may be a solid electrolyte, or may be an electrolyte solution. In the configuration example in FIG. 1, the electrolyte material included in the electrolyte layer 102 is a solid electrolyte.

In the case where the electrolyte material is a solid electrolyte, the solid electrolyte may be a halide solid electrolyte, a sulfide solid electrolyte, an oxide solid electrolyte, a polymer solid electrolyte, or a complex hydride solid electrolyte.

The halide solid electrolyte refers to a solid electrolyte including a halogen element. The halide solid electrolyte, which includes the halogen element, may further include oxygen. The halide solid electrolyte is free of sulfur (S).

The halide solid electrolyte may be, for example, a material represented by the following composition formula (1):

Li_{α}M_{β}X_{γ} Formula (1)

in the composition formula (1), α, β, and γ are each a value greater than 0, M is at least one selected from the group consisting of metalloid elements and metal elements other than Li, and X is at least one selected from the group consisting of F, Cl, Br, and I.

The "metalloid elements" refer to B, Si, Ge, As, Sb, and Te.

The "metal elements" refer to all the elements included in Groups 1 to 12 of the periodic table except hydrogen and all the elements included in Groups 13 to 16 of the periodic table except B, Si, Ge, As, Sb, Te, C, N, P, O, S, and Se. In other words, the "metalloid elements" and the "metal elements" are each a group of elements that can become a cation when forming an inorganic compound with a halogen compound.

In the composition formula (1), M may include Y, and X may include Cl and Br.

The halide solid electrolyte may be, for example, Li₃(Ca,Y,Gd)X₆, Li₂MgX₄, Li₂FeX₄, Li(Al,Ga,In)X₄, Li₃(Al,Ga,In)X₆, or Lil. Here, the element X in the above solid electrolytes is at least one selected from the group consisting of F, Cl, Br, and I. In the present disclosure, when an element in a formula is expressed as, for example, "(Al,Ga,In)", this expression indicates at least one element selected from the group of elements in parentheses. In other words, "(Al,Ga,In)" is synonymous with "at least one selected from the group consisting of Al, Ga, and In". The same applies to other elements.

Another example of the halide solid electrolyte is a compound represented by LiₐMe_{b}Y_{c}X₆, where a + mb + 3c = 6 and c > 0 are satisfied, Me is at least one selected from the group consisting of metalloid elements and metal elements other than Li or Y, and m is the valence of Me. The "metalloid elements" refer to B, Si, Ge, As, Sb, and Te. The "metal elements" refer to all the elements included in Groups 1 to 12 of the periodic table (except hydrogen) and all the elements included in Groups 13 to 16 of the periodic table (except B, Si, Ge, As, Sb, Te, C, N, P, O, S, and Se).

To enhance the ionic conductivity of the halide solid electrolyte material, Me may be at least one selected from the group consisting of Mg, Ca, Sr, Ba, Zn, Sc, Al, Ga, Bi, Zr, Hf, Ti, Sn, Ta, and Nb. The halide solid electrolyte may be Li₃YCl₆, Li₃YBr₆, or Li₃YBrₚCl₆₋ₚ, where p satisfies 0 < p < 6.

The sulfide solid electrolyte refers to a solid electrolyte including sulfur (S). The sulfide solid electrolyte, which includes sulfur, may further include a halogen element.

The sulfide solid electrolyte can be, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂.

The oxide solid electrolyte can be, for example: a NASICON solid electrolyte typified by LiTi₂(PO₄)₃ and element-substituted substances thereof; a (LaLi)TiO₃-based perovskite solid electrolyte; a LISICON solid electrolyte typified by Li₁₄ZnGe₄O₁₆, Li₄SiO₄, and LiGeO₄ and element-substituted substances thereof; a garnet solid electrolyte typified by Li₇La₃Zr₂O₁₂ and element-substituted substances thereof; Li₃PO₄ and N-substituted substances thereof; or glass or glass ceramics based on a Li-B-O compound, such as LiBO₂ or Li₃BO₃, to which Li₂SO₄, Li₂CO₃, or the like is added.

The polymer solid electrolyte can be, for example, a compound of a polymer compound and a lithium salt. The polymer compound may have an ethylene oxide structure. The polymer compound having an ethylene oxide structure can include a lithium salt in a large amount. Accordingly, the ionic conductivity can be further enhanced. The lithium salt can be LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, or the like. One lithium salt selected from the lithium salts described as examples can be used alone. Alternatively, a mixture of two or more lithium salts selected from the lithium salts described as examples can be used.

The complex hydride solid electrolyte can be, for example, LiBH₄-LiI or LiBH₄-P₂S₅.

The electrolyte layer 102 may include a halide solid electrolyte. The halide solid electrolyte is free of sulfur.

The electrolyte layer 102 may consist substantially of the halide solid electrolyte. The phrase "consist substantially of" as used herein is intended to allow for impurities contained in a content of less than 0.1%. The electrolyte layer 102 may consist of the halide solid electrolyte.

With the above configuration, it is possible to enhance the ionic conductivity of the electrolyte layer 102, thereby reducing a decrease in the energy density of the battery.

The electrolyte layer 102 may further include a binder. The binder may be the same material as any of the materials usable as the negative electrode active material layer 104.

The electrolyte layer 102 may have a thickness of 1 µm or more and 500 µm or less. In the case where the solid electrolyte layer 102 has a thickness of 1 µm or more, the negative electrode 101 and the positive electrode 103 are less prone to be shortcircuited. In the case where the solid electrolyte layer 102 has a thickness of 500 µm or less, the battery can operate at a high output.

The solid electrolyte may have any shape. In the case where the solid electrolyte is a powdery material, its shape may be, for example, an acicular, spherical, or ellipsoidal shape. The solid electrolyte may be, for example, particulate.

For example, in the case where the solid electrolyte is particulate (e.g., spherical), the solid electrolyte may have a median diameter of 100 µm or less, and may have a median diameter of 10 µm or less.

In the present disclosure, the "median diameter" means the particle diameter at a cumulative volume equal to 50% in the volumetric particle size distribution. The volumetric particle size distribution is measured with, for example, a laser diffractometer or an image analyzer.

In the case where the electrolyte layer 102 includes a solid electrolyte, the solid electrolyte can be manufactured by, for example, the following method.

Raw material powders are prepared so as to obtain a target composition. Examples of the raw material powders include an oxide, a hydroxide, a halide, and an acid halide.

In an example where the target composition is Li₃YBr₄Cl₂, LiBr, YCI, and YBr are mixed in an approximate molar ratio of 3:0.66:0.33. The raw material powders may be mixed in a molar ratio that has been adjusted in advance so as to cancel out a composition change that can occur in the synthesis process.

The raw material powders are reacted with each other mechanochemically (i.e., by mechanochemical milling) in a mixer such as a planetary ball mill to obtain a reactant. The reactant may be fired in a vacuum or in an inert atmosphere. Alternatively, the mixture of the raw material powders may be fired in a vacuum or in an inert atmosphere to obtain a reactant. The firing is performed, for example, desirably at 100°C or higher and 300°C or lower for 1 hour or longer. To suppress a composition change during the firing, the raw material powders are fired desirably in a hermetically sealed container such as a quartz tube.

Through these steps, the solid electrolyte is obtained.

The battery 1000, which includes the negative electrode 101, the electrolyte layer 102, and the positive electrode 103 as the basic constituent elements, is enclosed in a hermetically sealed container so as to prevent incorporation of the air and moisture. Examples of the shape of the battery 1000 include a coin type, a cylindrical type, a prismatic type, a sheet type, a button type, a flat type, and a stacked type.

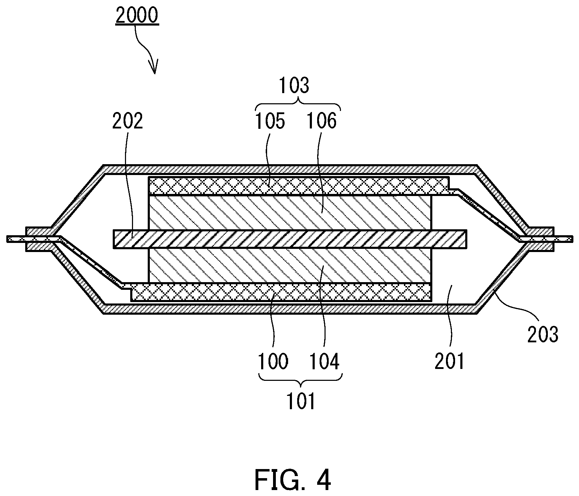

FIG. 4 is a cross-sectional view schematically showing a modification of the battery according to the embodiment of the claimed invention. In the case where the electrolyte material for the electrolyte layer 102 is an electrolyte solution, the battery according to the embodiment of the claimed invention may be, for example, a battery 2000 configured as shown in FIG. 4. In FIG. 4, the members having the same functions as those of the members shown in FIG. 1 are denoted by the same reference numerals. The battery 2000 includes the negative electrode 101, the positive electrode 103, an electrolyte solution 201, a separator 202, and an exterior 203. The separator 202 is disposed between the negative electrode 101 and the positive electrode 103. The negative electrode 101 and the positive electrode 103 face each other with the separator 202 interposed therebetween. The negative electrode 101, the positive electrode 103, the separator 202, and the electrolyte solution 201 are housed in the exterior 203. The electrolyte solution 201 is, for example, an electrolyte solution with which the negative electrode 101, the positive electrode 103, and the separator 202 are impregnated. Thus, in the battery 2000 having a configuration in which an electrolyte solution is used as the electrolyte, the electrolyte solution 201 with which the separator 202 is impregnated is positioned between the negative electrode 101 and the positive electrode 103. In other words, the electrolyte solution 201 with which the separator 202 is impregnated as described above serves as the electrolyte layer. The electrolyte solution 201 may fill the inner space of the exterior 203.

The electrolyte solution 201 includes, for example, a nonaqueous solvent and a lithium salt dissolved in the nonaqueous solvent.

Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of the cyclic carbonate solvent include ethylene carbonate, propylene carbonate, butylene carbonate, and vinylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorinated solvent include fluoroethylene carbonate, methyl fluoropropionate, fluorobenzene, fluoroethylmethyl carbonate, and fluorodimethylene carbonate. One nonaqueous solvent selected from the above may be used alone. Alternatively, a mixture of two or more nonaqueous solvents selected from the above may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used. The lithium salt has a concentration of, for example, 0.5 mol/L or more and 2 mol/L or less.

The separator 202 has lithium-ion conductivity. The material for the separator 202 may be any material through which lithium ions are allowed to pass. The material for the separator 202 can be at least one selected from the group consisting of a solid electrolyte, a gel electrolyte, an ion exchange resin membrane such as a lithium cation exchange resin membrane, a semipermeable membrane, and a porous membrane. In the case where the separator 202 is formed of any of the above materials, the safety of the battery 2000 can be sufficiently achieved. Examples of the solid electrolyte include a sulfide solid electrolyte, such as Li₂S-P₂S₅ and an oxide solid electrolyte, such as Li₇La₃Zr₂O₁₂(LLZ). Examples of the gel electrolyte include a gel electrolyte including a fluororesin, such as PVdF. Examples of the ion exchange resin membrane include a cation exchange membrane and an anion exchange membrane. Examples of the porous membrane include a porous membrane made of a polyolefin resin and a porous membrane made of glass paper obtained by weaving glass fibers into a nonwoven fabric.

The exterior 203 is made of a material obtained by, for example, laminating a metal foil, such as an aluminum foil, with a resin film, such as a polyethylene terephthalate (PET) film. The exterior 203 may be a container made of resin or metal.

The electrolyte material for use as the electrolyte layer is not limited to the above solid electrolyte or electrolyte solution, and may be a gel electrolyte or an ionic liquid.

The gel electrolyte can be a polymer material impregnated with a nonaqueous electrolyte solution. Examples of the polymer material include polyethylene oxide, polyacrylonitrile, polyvinylidene fluoride, polymethylmethacrylate, and a polymer having an ethylene oxide bond.

Examples of the cation contained in the ionic liquid include:
(i) an aliphatic chain quaternary salt, such as tetraalkylammonium or tetraalkylphosphonium;
(ii) an aliphatic cyclic ammonium, such as pyrrolidinium, morpholinium, imidazolinium, tetrahydropyrimidinium, piperazinium, or piperidinium; and
(iii) a nitrogen-containing heterocyclic aromatic cation, such as pyridinium or imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may include a lithium salt.

### Examples

The claimed invention will be described in detail below with reference to examples and reference examples. The following examples are illustrative only, and the claimed invention is not limited to the following examples.

### (Example 1)

### <Production of positive electrode>

The positive electrode active material used was lithium iron phosphate LiFePO₄ (manufactured by Hitachi Zosen Corporation). The positive electrode active material, acetylene black (AB) manufactured by Denka Company Limited, an N-methyl-2-pyrrolidone (NMP) solution including KF polymer (polyvinylidene fluoride (PVDF) manufactured by KUREHA CORPORATION, and an NMP solution were mixed to obtain a positive electrode mixture slurry. The positive electrode mixture slurry was produced in a mass ratio of the positive electrode active material:AB:PVDF = 90:7:3.

The positive electrode mixture slurry was applied to one side of a 10-µm thick aluminum foil serving as the positive electrode current collector. The positive electrode sheet, which was composed of the positive electrode current collector and the positive electrode mixture slurry applied thereto, was dried and then pressed. Subsequently, the positive electrode sheet pressed was punched out into a 2 cm × 2 cm piece to produce a positive electrode.

### <Production of negative electrode>

A pretreatment was performed in which a nickel foil (10 cm × 10 cm, thickness: 10 µm) was preliminarily degreased with an organic solvent, and then degreased by being immersed in an acidic solvent with its one side masked. Thus, the surface of the nickel foil was activated. To 1.0 mol/L of methanesulfonic acid, methanesulfonic acid bismuth serving as the soluble bismuth salt was added so that Bi³⁺ ions would reach 0.18 mol/L. Thus, a plating bath was produced. The nickel foil activated was connected to a power supply for current application, and then immersed in the plating bath. Subsequently, the unmasked surface of the nickel foil was electroplated with Bi under the control of the current density to 2 A/dm² so that the thickness would reach about 5 µm. Following the electroplating, the nickel foil was taken out from the acidic bath, and the mask was removed. The nickel foil was then cleaned with pure water and dried. Subsequently, in an electric furnace set to an argon atmosphere, the Bi-electroplated nickel foil was heat-treated at 400C° for 60 hours. Following the heat treatment, the Bi plating layer formed on the nickel foil was subjected to surface X-ray diffractometry. The X-ray diffraction pattern obtained by the diffractometry is as shown in FIG. 2. The X-ray diffraction pattern demonstrates that BiNi having a monoclinic crystal structure of C2/m space group was generated. In other words, a stack was obtained that was composed of: the current collector, which was constituted of a nickel foil; and the active material layer, which was made of BiNi having a crystal structure of space group C2/m and disposed in direct contact with the surface of the current collector. Subsequently, the stack obtained was punched out into a 2 cm × 2 cm piece to produce a negative electrode. In the active material layer of the negative electrode of Example 1, the peak intensity ratio I(2)/I(1) in the X-ray diffraction pattern was 0.28 or less.

### <Production of test cell>

The positive electrode and the negative electrode were disposed so that the respective active material sides would face each other. The positive electrode was double-coated with a microporous separator (Celgard 3401 manufactured by Asahi Kasei Corporation). The electrolyte solution prepared was a solution obtained by dissolving LiPF₆ in vinylene carbonate (VC) at a concentration of 1.0 mol/L. The positive electrode, the negative electrode, and the electrolyte solution as prepared above were used to assemble a battery serving as the test cell of Example 1.

### <Charge and discharge test>

In a thermostatic chamber set to 25°C, at a current value of IT = 0.05 calculated from the capacity of the positive electrode, the test cell of Example 1 was charged to 3.2 V (vs. Li⁺/Li) and then discharged to 2.0 V (vs. Li⁺/Li).

### <Results>

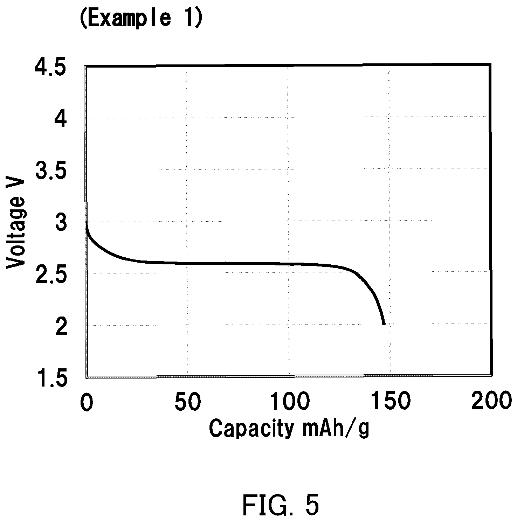

FIG. 5 is a graph of the results of the charge and discharge test on the test cell according to Example 1, showing the voltage during discharge and the discharge capacity per unit mass of the positive electrode active material. The results of the charge test indicate that the test cell of Example 1 had a charge capacity of 171.9 mAh/g per unit mass of the positive electrode active material. The results of the discharge test indicate that the test cell of Example 1 had a discharge capacity of 147.3 mAh/g, as shown in FIG. 5. In other words, the test cell according to Example 1 had a total discharge capacity of 147.3 mAh/g.

The test cell of Example 1 had an average discharge voltage of 2.58 V. The proportion of the capacity at the average discharge voltage ±0.1 V in the total discharge capacity is defined as an index of the flatness of the discharge voltage. Table 2 shows the results for the cell of Example 1. The above proportion, which defines an index of the flatness of the discharge voltage, is described in Table 2 as "Proportion of discharge capacity at flat cell voltage in total discharge capacity". For the above proportion, the cell of Example 1 exhibited a high value, 82%.

**[Table 2]**

| Average discharge voltage 2.58 V +0.1 V mAh/g | Average discharge voltage of 2.58 V -0.1 V mAh/g | Capacity at average discharge voltage of 2.58 V ±0.1 V mAh/g | Proportion of discharge capacity at flat cell voltage in total discharge capacity % |
|---|---|---|---|
| 13.5 | 134 | 120.5 | 82 |

### (Example 2)

### <Production of solid electrolyte>

In an argon atmosphere with a dew point of -60°C or lower (hereinafter referred to as a "dry argon atmosphere"), raw material powders LiBr, YCl₃, and YBr₃ were prepared in a molar ratio of LiBr:YCl₃:YBr₃ = 3:2/3:1/3. These raw material powders were pulverized and mixed in a mortar to obtain a mixture of the raw material powders. Subsequently, in a dry argon atmosphere, the mixture of the raw material powders obtained was fired in an electric furnace at 500°C for 3 hours to obtain a fired product. The fired product obtained was pulverized in a mortar with a pestle. Thus, a solid electrolyte having composition represented by Li₃YBr₄Cl₂ was obtained. "Li₃YBr₄Cl₂" is hereinafter also referred to as "LYBC".

### <Production of positive electrode>

The positive electrode active material used was lithium iron phosphate LiFePO₄ (manufactured by Hitachi Zosen Corporation). In producing the positive electrode, in an argon glove box, lithium iron phosphate LiFePO₄ serving as the positive electrode active material, the solid electrolyte LYBC, and a carbon nanofiber VGCF (registered trademark) manufactured by SHOWA DENKO K.K. serving as the conductive additive were mixed to obtain a positive electrode mixture powder. The positive electrode active material, the solid electrolyte, and the conductive additive were mixed in a mass ratio of the positive electrode active material:the solid electrolyte:the conductive additive = 50:40:10.

### <Production of negative electrode>

The negative electrode of Example 2 was produced in the same manner as in Example 1, except that the stack composed of the current collector and the active material layer was punched out into a φ0.92-cm piece as the negative electrode. Thus, the negative electrode having φ0.92 cm was produced.

### <Production of test cell>

In an insulating outer cylinder having an inner diameter of 9.4 mm, a layer formed of the positive electrode mixture powder and the negative electrode having φ0.92 cm produced in the above manner were disposed so that the negative electrode active material-containing layer side of the negative electrode would face the layer formed of the positive electrode mixture powder. The layer formed of the positive electrode mixture powder, a layer formed of the solid electrolyte Li₃YBr₄Cl₂ (80 mg), and the negative electrode were stacked so that the solid electrolyte would be disposed between the layer formed of the positive electrode mixture powder and the negative electrode active material-containing layer of the negative electrode. To the stack thus obtained, a pressure of 360 MPa was applied in the stacking direction. Thus, a battery serving as the test cell including a positive electrode, a solid electrolyte layer, and a negative electrode was formed. In the test cell, the positive electrode had a thickness of 22 µm, the solid electrolyte layer had a thickness of 400 µm, and the negative electrode had a thickness of 16.5 µm.

Subsequently, current collectors made of stainless steel were attached to the positive electrode and the negative electrode, and current collector leads were attached to the current collectors.

Lastly, an insulating ferrule was used to block the inside of the insulating outer cylinder from the outside air atmosphere to hermetically seal the cylinder.

### <Charge and discharge test>

A charge and discharge test was performed on the produced test cell under the following conditions. In a thermostatic chamber set to 25°C, at a current value of IT = 0.05 calculated from the capacity of the positive electrode, the test cell was charged to 3.2 V (vs. Li⁺/Li) and then discharged to 2.0 V (vs. Li⁺/Li).

### <Results>

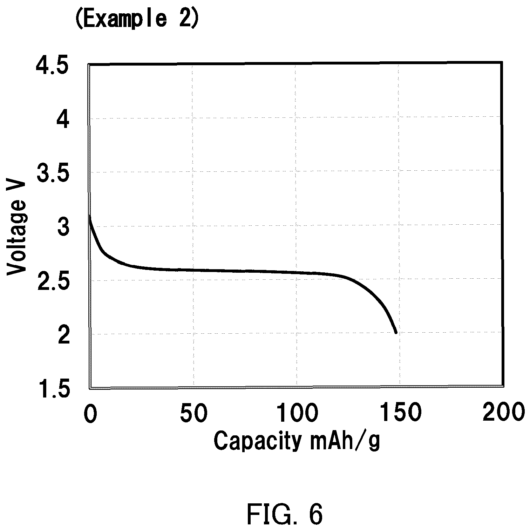

FIG. 6 is a graph of the results of the charge and discharge test on the test cell according to Example 2, showing the voltage during discharge and the discharge capacity per unit mass of the positive electrode active material. The results of the charge test indicate that the test cell of Example 2 had a charge capacity of 171.3 mAh/g per unit mass of the positive electrode active material. The results of the discharge test indicate that the test cell of Example 2 had a discharge capacity of 148.3 mAh/g, as shown in FIG. 6. In other words, the test cell according to Example 2 had a total discharge capacity of 148.3 mAh/g.

The test cell of Example 2 had an average discharge voltage of 2.56 V. As in Example 1, the proportion of the capacity at the average discharge voltage ±0.1 V in the total discharge capacity is defined as an index of the flatness of the discharge voltage. Table 3 shows the results for the cell of Example 2. The above proportion, which defines an index of the flatness of the discharge voltage, is described in Table 3 as "Proportion of discharge capacity at flat cell voltage in total discharge capacity". For the above proportion, the cell of Example 2 exhibited a high value, 78%.

**[Table 3]**

| Average discharge voltage of 2.56 V +0.1 V mAh/g | Average discharge voltage of 2.56 V -0.1 V mAh/g | Capacity at average discharge voltage of 2.56 V ±0.1 V mAh/g | Proportion of discharge capacity at flat cell voltage in total discharge capacity % |
|---|---|---|---|
| 14.9 | 130 | 115.1 | 78 |

### (Reference Example 1)

### <Test cell>

ML batteries put on the market as coin-type lithium manganese dioxide rechargeable batteries have a battery configuration in which manganese dioxide is used as the positive electrode active material, a lithium-aluminum alloy is used as the negative electrode active material, and a solution of an electrolyte dissolved in an organic solvent is used as the electrolyte solution. ML batteries are batteries having a high voltage and a large plateau compared with nickel-cadmium batteries.

For example, a datasheet of a coin-type lithium manganese dioxide rechargeable battery "ML2032" (manufactured by Maxell, Ltd.) indicates the discharge characteristics of varying in battery voltage at a resistance of 240 kΩ. According to the discharge characteristics, this battery can be regarded as a battery having a large plateau. In view of this, ML2032 was used as the test cell for a charge and discharge test based on the capacity of 65 mAh according to the datasheet of ML2032.

### <Charge and discharge test>

In a 25°C environment, at a current value of IT = 0.05, the test cell of Reference Example 1 was charged to 3.2 V (vs. Li⁺/Li) and then discharged to 2.0 V (vs. Li⁺/Li).

### <Results>

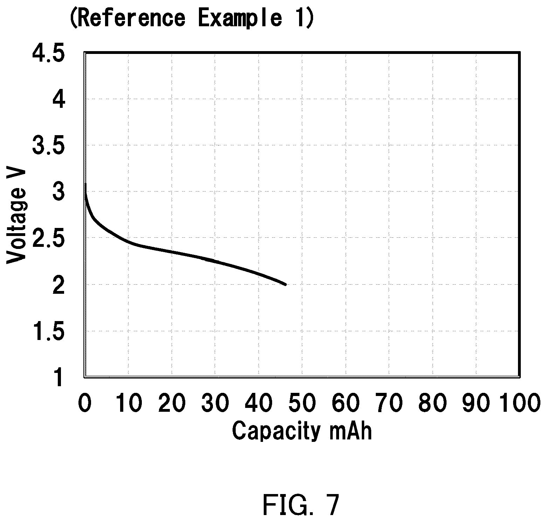

FIG. 7 is a graph of the results of the charge and discharge test on the test cell according to Reference Example 1, showing the voltage during discharge and the discharge capacity per unit mass of the positive electrode active material. The results of the charge and discharge test indicate that the test cell of Reference Example 1 had a discharge capacity of 46.1 mAh, as shown in FIG. 7. In other words, the test cell according to Reference Example 1 had a total discharge capacity of 46.1 mAh/g.

The test cell of Reference Example 1 had an average discharge voltage of 2.33 V. The proportion of the capacity at the average discharge voltage ±0.1 V in the total discharge capacity is defined as an index of the flatness of the discharge voltage. Table 4 shows the results for the cell of Reference Example 1. The above proportion, which defines an index of the flatness of the discharge voltage, is described in Table 4 as "Proportion of discharge capacity at flat cell voltage in total discharge capacity". For the above proportion, the cell of Reference Example 1 exhibited 44%.

**[Table 4]**

| Average discharge voltage of 2.33 V +0.1 V mAh | Average discharge voltage of 2.33 V -0.1 V mAh | Capacity at average discharge voltage of 2.33 V ±0.1 V mAh | Proportion of discharge capacity at flat cell voltage in total discharge capacity % |
|---|---|---|---|
| 11.2 | 31.4 | 20.2 | 44 |

### (Reference Example 2)

In the same manner as in Reference Example 1, a charge and discharge test was performed on a coin-type lithium manganese dioxide rechargeable battery ML2032 (manufactured by Maxell, Ltd.) as the test cell.

### <Charge and discharge test>

In a 25°C environment, at a current value of 200 µA, that is, a current value of IT = 0.003, the test cell of Reference Example 2 was charged to 3.2 V (vs. Li⁺/Li) and then discharged to 2.0 V (vs. Li⁺/Li).

### <Results>

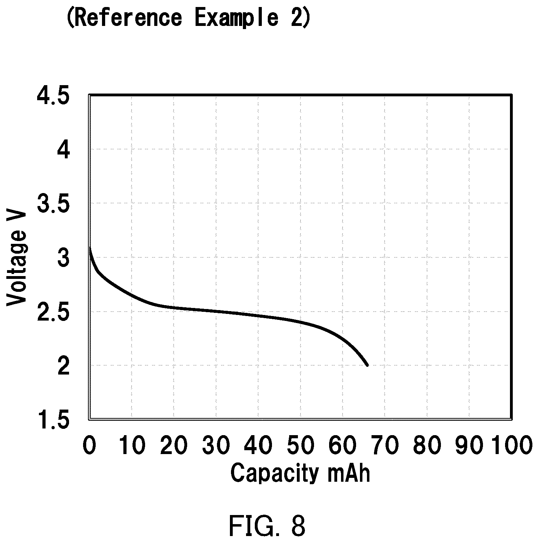

FIG. 8 is a graph of the results of the charge and discharge test on the test cell according to Reference Example 2, showing the voltage during discharge and the discharge capacity per unit mass of the positive electrode active material. The results of the charge and discharge test indicate that the test cell of Reference Example 2 had a discharge capacity of 65.9 mAh, as shown in FIG. 8. In other words, the test cell according to Reference Example 2 had a total discharge capacity of 65.9 mAh/g.

The test cell of Reference Example 2 had an average discharge voltage of 2.49 V. The proportion of the capacity at the average discharge voltage ±0.1 V in the total discharge capacity is defined as an index of the flatness of the discharge voltage. Table 5 shows the results for the cell of Reference Example 2. The above proportion, which defines an index of the flatness of the discharge voltage, is described in Table 5 as "Proportion of discharge capacity at flat cell voltage in total discharge capacity". For the above proportion, the cell of Reference Example 2 exhibited 57%.

**[Table 5]**

| Average discharge voltage of 2.49 V +0.1 V mAh | Average discharge voltage of 2.49 V -0.1 V mAh | Capacity at average discharge voltage of 2.49 V ±0.1 V mAh | Proportion of discharge capacity at flat cell voltage in total discharge capacity % |
|---|---|---|---|
| 13.3 | 51 | 37.7 | 57 |

### (Reference Example 3)

### <Production of positive electrode>

The positive electrode active material was produced by coprecipitation. A hydroxide obtained by coprecipitation, represented by [Ni_{0.60}Co_{0.20}Mn_{0.20}](OH)₂, was fired at 500°C to obtain a nickel-cobalt-manganese composite oxide. The composite oxide obtained and lithium hydroxide LiOH were dry-mixed in a molar ratio Li/(Ni + Co + Mn) = 1.1, and raised in temperature to 1000°C in an oxygen atmosphere, and the resulting mixture was fired for 10 hours. The mixture fired was analyzed with an inductively coupled plasma emission spectrometer CIROS-120 (manufactured by SPECTRO Analytical Instruments GmbH) to derive the element ratio of the composition. The derived element ratio was Li:Ni:Co:Mn = 1.04:0.59:0.20:0.19 on a molar ratio basis.

The positive electrode active material thus produced, acetylene black (AB) manufactured by Denka Company Limited, a N-methyl-2-pyrrolidone (NMP) solution including KF polymer (polyvinylidene fluoride (PVDF) manufactured by KUREHA CORPORATION, and an NMP solution were mixed to obtain a positive electrode mixture slurry. The positive electrode mixture slurry was produced in a mass ratio of the positive electrode active material:AB:PVDF = 90:7:3.

The positive electrode mixture slurry was applied to one side of a 10-µm thick aluminum foil serving as the positive electrode current collector. The positive electrode sheet, which was composed of the positive electrode current collector and the positive electrode mixture slurry applied thereto, was dried and then pressed. Subsequently, the positive electrode sheet pressed was punched out into a 2 cm × 2 cm piece to produce a positive electrode.

### <Production of negative electrode>

The negative electrode of Reference Example 3 was produced in the same manner as in Example 1.

### <Production of test cell>

A battery serving as the test cell of Reference Example 3 was assembled in the same manner as in Example 1 by using the positive electrode and the negative electrode of Reference Example 3.

### <Charge and discharge test>

In a thermostatic chamber set to 25°C, at a current value of IT = 0.05 calculated from the capacity of the positive electrode, the test cell of Reference Example 3 was charged to 3.9 V (vs. Li⁺/Li) and then discharged to 1.5 V (vs. Li⁺/Li).

### <Results>

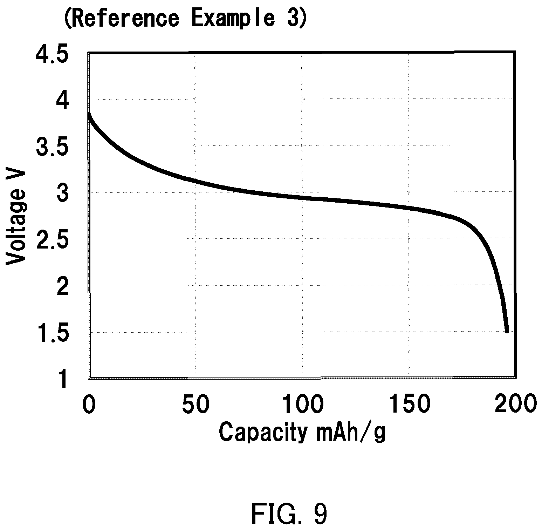

FIG. 9 is a graph of the results of the charge and discharge test on the test cell according to Reference Example 3, showing the voltage during discharge and the discharge capacity per unit mass of the positive electrode active material. The results of the charge and discharge test indicate that the test cell of Reference Example 3 had a discharge capacity of 196.1 mAh/g per unit mass of the positive electrode active material, as shown in FIG. 9. In other words, the test cell according to Reference Example 3 had a total discharge capacity of 196.1 mAh/g.

The test cell of Reference Example 3 had an average discharge voltage of 2.97 V. The proportion of the capacity at the average discharge voltage ±0.1 V in the total discharge capacity is defined as an index of the flatness of the discharge voltage. Table 6 shows the results for the cell of Reference Example 3. The above proportion, which defines an index of the flatness of the discharge voltage, is described in Table 6 as "Proportion of discharge capacity at flat cell voltage in total discharge capacity". For the above proportion, the cell of Reference Example 3 exhibited 38%.

**[Table 6]**

| Average discharge voltage of 2.97 V +0.1 V mAh/g | Average discharge voltage of 2.97 V -0.1 V mAh/g | Capacity at average discharge voltage of 2.97 V ±0.1 V mAh/g | Proportion of discharge capacity at flat cell voltage in total discharge capacity % |
|---|---|---|---|
| 58.4 | 132.3 | 73.9 | 38 |

From the above, the battery can have an expanded plateau by including, as the positive electrode active material, lithium iron phosphate LiFePO₄ and including, as the negative electrode active material, an alloy including Bi and Ni.

The following is demonstrated; the positive electrode active material is not limited to lithium iron phosphate LiFePO₄, and a battery having a large plateau as in Examples 1 and 2 can be achieved even by including, as the positive electrode active material, a compound including a transition metal element and an oxoanion and being capable of occluding and releasing lithium ions (in particular, a compound capable of an electrochemical reaction with lithium, where the reaction includes a two-phase coexistence reaction), and including, as the negative electrode active material, an alloy including Bi and Ni.

### INDUSTRIAL APPLICABILITY

The battery of the claimed invention can be used as, for example, a lithium secondary battery.

## Claims

1. A battery (1000, 2000) comprising:
a positive electrode (103);
a negative electrode (101, 109); and
an electrolyte layer (102, 202) positioned between the positive electrode (103) and the negative electrode (101, 109), wherein
the positive electrode (103) includes a positive electrode active material layer (106),
the positive electrode active material layer (106) includes a compound, the compound including a transition metal element and an oxoanion and being capable of occluding and releasing lithium ions,
the negative electrode (101, 109) includes a negative electrode current collector (100, 107) and a negative electrode active material layer (104, 108),
the negative electrode active material layer (104, 108) includes BiNi,
**characterised in that** the
BiNi has a monoclinic crystal structure of space group C2/m, and
the negative electrode active material layer (104, 108) is a heat-treated plating layer.

2. The battery (1000, 2000) according to claim 1, wherein
the oxoanion includes B, Si, P, or S.

3. The battery (1000, 2000) according to claim 2, wherein
the oxoanion is BO₃³⁻, SiO₄⁴⁻, PO₄³⁻, P₂O₇⁴⁻, or SO₄²⁻.

4. The battery (1000, 2000) according to any one of claims 1 to 3, wherein
an electrochemical reaction between the compound and lithium includes a two-phase coexistence reaction.

5. The battery (1000, 2000) according to any one of claims 1 to 4, wherein
the compound has an olivine structure.

6. The battery (1000, 2000) according to any one of claims 1 to 5, wherein
the transition metal element is at least one selected from the group consisting of Fe, Mn, Co, and Ni.

7. The battery (1000, 2000) according to any one of claims 1 to 6, wherein
the positive electrode active material layer (106) includes LiFePO₄.

8. The battery (1000, 2000) according to any one of claims 1 to 7, wherein
the negative electrode active material layer (104, 108) includes at least one selected from the group consisting of LiBi and Li₃Bi.

9. The battery (1000, 2000) according to any one of claims 1 to 8, wherein
the negative electrode active material layer (104, 108) is free of a solid electrolyte.

10. The battery (1000, 2000) according to any one of claims 1 to 9, wherein
the negative electrode current collector (100, 107) includes at least one selected from the group consisting of Cu and Ni.

11. The battery (1000) according to any one of claims 1 to 10, wherein
the electrolyte layer (102) is a solid electrolyte layer (102).

12. The battery (1000) according to claim 11, wherein
the solid electrolyte layer (102) includes a halide solid electrolyte, and the halide solid electrolyte is free of sulfur.

13. The battery (1000) according to claim 11, wherein
the solid electrolyte layer (102) includes a sulfide solid electrolyte.

14. The battery (2000) according to any one of claims 1 to 10, wherein
the electrolyte layer (202) includes an electrolyte solution (201).

## Patentansprüche

1. Batterie (1000, 2000), umfassend:
eine positive Elektrode (103);
eine negative Elektrode (101, 109); und
eine Elektrolytschicht (102, 202), die zwischen der positiven Elektrode (103) und der negativen Elektrode (101, 109) angeordnet ist, wobei
die positive Elektrode (103) eine Aktivmaterialschicht der positiven Elektrode (106) umfasst,
die Aktivmaterialschicht der positiven Elektrode (106) eine Verbindung umfasst, wobei die Verbindung ein Übergangsmetallelement und ein Oxoanion umfasst und in der Lage ist, Lithiumionen einzulagern und freizusetzen,
die negative Elektrode (101, 109) einen Stromkollektor der negativen Elektrode (100, 107) und eine Aktivmaterialschicht der negativen Elektrode (104, 108) umfasst,
die Aktivmaterialschicht der negativen Elektrode (104, 108) BiNi umfasst,
**dadurch gekennzeichnet, dass das**
BiNi eine monokline Kristallstruktur der Raumgruppe C2/m aufweist, und
die Aktivmaterialschicht der negativen Elektrode (104, 108) eine wärmebehandelte Plattierungsschicht ist.

2. Batterie (1000, 2000) nach Anspruch 1, wobei
das Oxoanion B, Si, P oder S umfasst.

3. Batterie (1000, 2000) nach Anspruch 2, wobei
das Oxoanion BO₃³⁻, SiO₄⁴⁻, PO₄³⁻, P₂O₇⁴⁻ oder SO₄²⁻ ist.

4. Batterie (1000, 2000) nach einem der Ansprüche 1 bis 3, wobei
eine elektrochemische Reaktion zwischen der Verbindung und Lithium eine Zweiphasen-Koexistenzreaktion umfasst.

5. Batterie (1000, 2000) nach einem der Ansprüche 1 bis 4, wobei
die Verbindung eine Olivinstruktur aufweist.

6. Batterie (1000, 2000) nach einem der Ansprüche 1 bis 5, wobei
das Übergangsmetallelement mindestens eines ist, ausgewählt aus der Gruppe bestehend aus Fe, Mn, Co und Ni.

7. Batterie (1000, 2000) nach einem der Ansprüche 1 bis 6, wobei
die Aktivmaterialschicht der positiven Elektrode (106) LiFePO₄ umfasst.

8. Batterie (1000, 2000) nach einem der Ansprüche 1 bis 7, wobei
die Aktivmaterialschicht der negativen Elektrode (104, 108) mindestens eines umfasst, ausgewählt aus der Gruppe bestehend aus LiBi und Li₃Bi.

9. Batterie (1000, 2000) nach einem der Ansprüche 1 bis 8, wobei
die Aktivmaterialschicht der negativen Elektrode (104, 108) frei von einem Festelektrolyten ist.

10. Batterie (1000, 2000) nach einem der Ansprüche 1 bis 9, wobei
der Stromkollektor der negativen Elektrode (100, 107) mindestens eines umfasst, ausgewählt aus der Gruppe bestehend aus Cu und Ni.

11. Batterie (1000) nach einem der Ansprüche 1 bis 10, wobei
die Elektrolytschicht (102) eine Festelektrolytschicht (102) ist.

12. Batterie (1000) nach Anspruch 11, wobei
die Festelektrolytschicht (102) einen Halogenid-Festelektrolyten umfasst, und der Halogenid-Festelektrolyt frei von Schwefel ist.

13. Batterie (1000) nach Anspruch 11, wobei
die Festelektrolytschicht (102) einen Sulfid-Festelektrolyten umfasst.

14. Batterie (2000) nach einem der Ansprüche 1 bis 10, wobei
die Elektrolytschicht (202) eine Elektrolytlösung (201) umfasst.

## Revendications

1. Batterie (1000, 2000) comprenant :
une électrode positive (103) ;
une électrode négative (101, 109) ; et
une couche d'électrolyte (102, 202) disposée entre l'électrode positive (103) et l'électrode négative (101, 109), dans laquelle
l'électrode positive (103) comprend une couche de matériau actif d'électrode positive (106),
la couche de matériau actif d'électrode positive (106) comprend un composé, le composé comprenant un élément métallique de transition et un anion oxo et étant capable d'occlure et de libérer des ions lithium,
l'électrode négative (101, 109) comprend un collecteur de courant d'électrode négative (100, 107) et une couche de matériau actif d'électrode négative (104, 108),
la couche de matériau actif d'électrode négative (104, 108) comprend du BiNi,
**caractérisée en ce que**
le BiNi a une structure cristalline monoclinique du groupe d'espace C2/m, et
la couche de matériau actif d'électrode négative (104, 108) est une couche de placage traitée thermiquement.

2. Batterie (1000, 2000) selon la revendication 1, dans laquelle
l'anion oxo comprend B, Si, P ou S.

3. Batterie (1000, 2000) selon la revendication 2, dans laquelle
l'anion oxo est BO₃³⁻, SiO₄⁴⁻, PO₄³⁻, P₂O₇⁴⁻ ou SO₄²⁻.

4. Batterie (1000, 2000) selon l'une quelconque des revendications 1 à 3, dans laquelle
une réaction électrochimique entre le composé et le lithium comprend une réaction de coexistence à deux phases.

5. Batterie (1000, 2000) selon l'une quelconque des revendications 1 à 4, dans laquelle
le composé a une structure olivine.

6. Batterie (1000, 2000) selon l'une quelconque des revendications 1 à 5, dans laquelle
l'élément métallique de transition est au moins un élément choisi dans le groupe constitué de Fe, Mn, Co et Ni.

7. Batterie (1000, 2000) selon l'une quelconque des revendications 1 à 6, dans laquelle
la couche de matériau actif d'électrode positive (106) comprend du LiFePO₄.

8. Batterie (1000, 2000) selon l'une quelconque des revendications 1 à 7, dans laquelle
la couche de matériau actif d'électrode négative (104, 108) comprend au moins un élément choisi dans le groupe constitué de LiBi et Li₃Bi.

9. Batterie (1000, 2000) selon l'une quelconque des revendications 1 à 8, dans laquelle
la couche de matériau actif d'électrode négative (104, 108) est exempte d'électrolyte solide.

10. Batterie (1000, 2000) selon l'une quelconque des revendications 1 à 9, dans laquelle
le collecteur de courant d'électrode négative (100, 107) comprend au moins un élément choisi dans le groupe constitué de Cu et Ni.

11. Batterie (1000) selon l'une quelconque des revendications 1 à 10, dans laquelle la couche d'électrolyte (102) est une couche d'électrolyte solide (102).

12. Batterie (1000) selon la revendication 11, dans laquelle
la couche d'électrolyte solide (102) comprend un électrolyte solide à base d'halogénure, et
l'électrolyte solide à base d'halogénure est exempt de soufre.

13. Batterie (1000) selon la revendication 11, dans laquelle
la couche d'électrolyte solide (102) comprend un électrolyte solide à base de sulfure.

14. Batterie (2000) selon l'une quelconque des revendications 1 à 10, dans laquelle
la couche d'électrolyte (202) comprend une solution électrolytique (201).
